# EUROPEAN PATENT APPLICATION

(11) **EP 4 438 390 A1**
(43) Date of publication of application: **02.10.2024**
(21) Application number: 23164772.8
(22) Date of filing: 28.03.2023
(51) Int. Cl.: B60L 53/31, B60L 53/67, B60L 53/63, B60L 53/66, H02J 7/00

(54) **SYSTEM AND METHOD FOR SEQUENTIAL CHARGING OF AN ELECTRIC VEHICLE**

(71) Applicant: ECdrive ApS, 4030 Tune (DK)
(72) Inventor: Schioldann Nielsen, Henrik, 4000 Roskilde (DK)
(74) Representative: Patrade A/S

(57) **Abstract**

The present invention relates to a system (1) for sequential charging electric vehicles (10). The system comprises a charging unit (20) connected to a power supply (21) and a plurality of satellite chargers (30), each electrically connected to the charging unit (20). Each satellite charger (30) is configured for engaging vehicle charging means (11). The system further comprises one or more switches (40) connecting (40a) and disconnecting (40b) the electrical connection between the charging unit (20) and each of the satellite chargers (30). The system further comprises a charging slot prioritizing module (50) and a sequence controller (60) in communication with the charging slot prioritizing module (50). The sequence controller (60) is configured for controlling the switches (40) and thereby enable an electric vehicle to be charged.

## Description

### Field of the Invention

The present invention relates to a system for sequential charging of electric vehicles. The system comprises a charging unit connected to a power supply and a plurality of satellite chargers each electrically connected to the charging unit. Each satellite charger is configured for engaging vehicle charging means. The system further comprises one or more switches connecting and disconnecting the electrical connection between the charging unit and each of the satellite chargers. The system further comprises a charging slot prioritizing module and a sequence controller in communication with the charging slot prioritizing module. The sequence controller is configured for controlling the switches and thereby enable an electric vehicle to be charged.

### Background of the Invention

Charging systems for electrical vehicles in public and semi-public locations and parking spots are known and widely used. These charging stations often utilize parallel charging which is not very efficient as it is passive when not actively used for charging a vehicle.

One of the issues owners of electric vehicles face is finding an available parking spot that provides charging. Another issue is time restrictions on parking for electric vehicles due to shortage of charging stations. This often requires the vehicle to be moved to a different parking spot to enable another vehicle to use the charger.

With the increasing demand for more sustainable means of transportation, the issue of both accessing chargers and having to move the vehicle will only increase in the future.

### Object of the Invention

One object of the invention is to provide a system and method for sequential charging of an electric vehicle to improve utilisation of the charging capacity by minimizing the passive time of a charger.

A further objective is to provide a method of prioritizing charging slots depending on user and/or vehicle information.

Yet a further objective is to refit an existing charger with a system for sequential charging and thereby expanding the number of vehicles with access to a charger.

### Description of the Invention

One object of the invention is achieved by a system for sequential charging of electric vehicles.

The system comprises:
- a charging unit connected to a power supply;
- a plurality of satellite chargers each electrically connected to the charging unit, wherein each satellite charger is configured for engaging vehicle charging means;
- one or more switches connecting and disconnecting the electrical connection between the charging unit and each of the satellite chargers;
- a charging slot prioritizing module;
- a sequence controller in communication with the charging slot prioritizing module, the sequence controller is configured for controlling the switches.

The term electric vehicle is used to describe a vehicle that is completely or partially electrically driven such as plug-in hybrids.

Parallel charging stations with multiple power outlets split the electrical output across multiple connected vehicles, thus causing the charging time for each vehicle to increase.

The system charging slot prioritizing module may determine to connect more than one satellite charger to the charging unit, thereby charging several vehicles at the same time.

The system charging slot prioritizing module may determine to connect only one satellite charger to the charging unit, thereby maximizing the charging capability of a single vehicle and minimizing the charging time.

One benefit of having a dynamic sequential charging system is that the time a charger is blocked because of a parked car no longer charging is limited, thereby effectively increasing the amount of charging slots. Because more cars can be passively connected to the satellite charger while awaiting their allocated charging time, the overall passive time of the system is decreased. Furthermore, each user of the system will benefit as it is possible to effectively use the system around the clock without manually moving the vehicle when a charger is available.

The sequential charging system results in less load on the power grid as fewer amperes are required for installation, thus minimizing the environmental impact because of smarter equipment.

In a residential area with communal parking, the number of vehicles able to charge at night using parallel charging are limited to the number of charging stations. With the sequential charging system, a great number of vehicles are connected at once and charged in sequence depending on the input from the charging slot prioritizing module.

The charging slot prioritization module may comprise one or more of the following: a calendar, a booking system, a parking payment system, charging history, payment overview.

As a single sequential charging system comprises a plurality of satellite chargers, it is possible to install the system in locations with a shortage of space. The required connection to the power supply is limited to a single system covering a large area, which reduces establishment and operating costs. This further results in an optimal utilization of installed infrastructure.

The satellite chargers may be arranged close to the charging unit or distributed over a larger area.

The system is ideal for locations such as airport parking, housing units, workplaces, municipalities' own cars, or rental cars etc. In these locations the need for driving, parking and charging are limited to certain periods and may greatly benefit from access to a sequential charging system.

The sequential controller may be connected to each of the switches using signal wire.

The charging unit may be an OCPP charger with a backend.

The satellite chargers may be connected to the charging unit and/or the sequential controller using cables above or below ground.

The layout of the system may be flexible with the opportunity to easily add or remove satellite chargers depending on availability of charging slots and growing demand.

In an aspect, the sequential controller wirelessly controls the switches.

In one embodiment, the charging slot prioritizing module may be configured for receiving vehicle information input regarding an electric vehicle.

The vehicle information input may comprise one or more of the following:
- time of engagement of vehicle charging means;
- earliest parking end-time;
- latest parking end-time;
- battery status;
- vehicle charging capability;
- urgency;
- request to charge as soon as possible.

The charging slot prioritizing module may be arranged to allocate at least one charging slot for the electric vehicle based on at least the vehicle information input.

The vehicle information input may assist the slot prioritizing module in determining the electric vehicle's charging needs, possible charging timeframe, and the urgency of the charge.

The battery status and the vehicle charging capability may help predict the how much time it will take to charge the battery of the electric vehicle. The vehicle charging capability may change during the charging session depending on the temperature and the battery status. The battery in the electric vehicle may be charged less than 100% to maximize the longevity of the battery.

The electric vehicle may have a smaller charging capability than the capability of the sequential charging system. In that case, the charging slot prioritizing module may decide to allow several connected electric vehicles to be charged simultaneously without compromising the charging time for each vehicle.

A request for charging as soon as possible may indicate that a vehicle has a short charging window, that the parking end-time is unknown and/or that the vehicle may be required for use on a short notice.

Vehicles used for emergencies such as ambulances, police cars and firetrucks may be registered in a prioritized category.

In an aspect, the charging slot prioritizing module may always have an emergency slot available.

In an aspect, the charging slot prioritizing module may prioritize a group of vehicles, such as company owned vehicles at a workplace, vehicles used by domiciliary care workers, residents in a residential area. The charging slot prioritizing module may allocate slots to non-prioritized vehicles depending on availability.

In one embodiment, the charging slot prioritizing module may be arranged to allocate the at least one charging slot for an electric vehicle based on further information about one or more of the following:
- vehicle information input from one or more further engaged electric vehicles;
- availability of satellite chargers;
- info from a prioritized user.

The price of the charge is dependent on the cost of electricity and available timeslots. The vehicle information input may comprise a request to charge when the cost of electricity is low.

The information from a prioritized user may comprise an indication of urgent or non-urgent need for charging. In the case of non-urgent need for charging, the vehicle may be allocated a charging timeslot on the same terms as the non-prioritized vehicles.

In one embodiment, the switches may be relays and/or contactors.

In one embodiment, the switches may be grouped in one or more relay units each comprising a plurality of relays. Each relay may be configured for controlling a contactor connecting and disconnecting the electrical connection between the charging unit and each of the satellite chargers.

In an aspect, each relay unit may comprise 4 relays. In another aspect, each relay unit may comprise between 2 and 10 relays.

In an aspect, the system may comprise 5 relay units. In another aspect, the system may comprise between 1 and 10 relay units.

In one embodiment, the charging unit may be electrically connected to 1-20 satellite chargers, 1-6 satellite chargers, 4-10 satellite chargers, 10-16 satellite chargers, 14-20 satellite chargers. A preferred number may be 4, 8, 12, 16, 20 or 24 satellite chargers.

In one embodiment, the charging slot prioritizing module may be arranged on data processing means in or near the sequence controller or on remote data processing means.

In one embodiment, the charging slot prioritizing module may be arranged to communicate with a system back end and with one or more of the following:
- user interface on charger unit, mobile device and/or satellite charger;
- cloud-based user platform such as an app on a mobile device;
- admin user device for overall status such as overview of allocated slots, need for maintenance, utilization %.

The system backend may be a OCPP system. The system backend may allow control of the system, data storage, comprise relevant programs and processing means to ensure optimal usage of the system as well as e.g. ensuring data on payments, total W used, users, the data formal requirements are saved, processed etc. when required.

The user interface may be located on each or on selected satellite chargers, mobile device, on the charging unit, or be one or more standalone units. The user interface may allow one or more users to enter information and/or may be arranged to provide information to one or more users.

The cloud-based user platform may enable remote control of the system via an app. The user platform may enable the user to specify vehicle information input such as request for a timeslot, specifying the earliest and/or latest parking end-time, urgency, a request to charge as soon as possible. The user may also create a recuring charging slot, for instance charging between 17.00 and 07.00 o'clock on weekdays. The recurring charging slot may be limited to charging only if the battery level is below a certain point.

The cloud-based user platform may further enable the user to see information such as availability of the sequential charging system, availability and location of nearby sequential charging systems, information on previous charger use, prices, subscriptions.

The admin user may be the owner of the sequential charging system and/or employees of the owner such as managers, maintenance workers, technicians, analysts.

In one embodiment, the system may comprise a payment system.

In an aspect, the payment system may be integrated in a cloud-based user platform. The payment system may be comprised in a user interface. The user interface may be located on each or on selected satellite chargers, on the charging unit, or be one or more standalone units.

The payment system may be combined with paying for parking.

In one embodiment, the system may comprise identification means configured for identifying an electric vehicle to be charged or a user.

The identification means may comprise a license plate scanner for identifying the vehicle, or automatic connecting to a user device or registered vehicle via Bluetooth and/or wifi.

In one embodiment, the charging slot prioritizing module may allocate timeslots for charging an electric vehicle based on charging patterns identified from previous use of a charging system.

The charging patterns may also take user-defined recurring charging slots or prioritized vehicles/users into consideration when allocating available timeslots requested by non-prioritized vehicles.

In one embodiment, the charging unit may supply 11-600 kW, 11-47 kW, 20-47 kW, 47-180 kW, 80-350 kW, or 150-600 kW direct current to the vehicle charging means, but preferably between 11-47 kW or 20-47 kW.

In one embodiment, the charging unit may supply 3-50 kW, 3-8 kW, 7-22 kW, 15-30 kW or 20-50 kW alternating current to the vehicle charging means, but preferably between 3-8 kW or 15-30 kW.

In one embodiment, the satellite charger may further comprise a power cable with a power plug arranged for engaging the vehicle charging means.

The vehicle charging means may be a vehicle charging port. The power plug may comprise different connectors to enabling electric vehicles using different standards to be charged.

In one embodiment, the vehicle charging means may comprise inductive charging configured for charging a parked electric vehicle.

In one embodiment, the system may comprise a power supply swich configured for connecting and disconnecting the electrical connection between the power supply and the charging unit. The power supply switch may be controlled by the charging slot prioritizing module.

The charging slot prioritizing module may determine to connect or disconnect the electrical connection to the power supply when at least one satellite charger is to charge an electric vehicle.

Parts of the system, e.g. the sequential controller, some switches e.g. in form of relay units, some data processing means, power supplies, payment means, card scanner, charging slot prioritizing module controls and/or user interface(s) may in some embodiments be arranged in a single unit on the parking site e.g. a box for easy access and a simple system.

Box, data processing means with charging slot prioritizing module, satellite chargers, back end and/or other relevant units may comprise means for receiving and/or sending information such as wifi, Bluetooth, telephone signal etc. This may allow the different parts to communicate with execution signals, updated information on e.g. status, available slots, on/off info etc. It may also allow communication with various remote systems or units such as back end, users, apps etc.

A further objective of the invention is achieved by a method of charging an electric vehicle using the system according to the invention.

The method comprises one or more of the following acts:
- creating a user account and registering one or more electric vehicles;
- requesting a timeslot for charging an electrical vehicle;
- receiving information on the request being accepted or denied; and if accepted
- connecting a satellite charger to the vehicle charging means.

A single user account may have a single vehicle or multiple vehicles registered. A user may be shared across multiple users, such as a fleet of vehicles with different drivers within a company.

If a timeslot has been denied based of no availability within the requested timeslot, an alternative timeslot may be suggested and/or a standby charging slot may be offered. The standby charging slot may enable charging the electric vehicle in the case that one of the vehicles with an allocated timeslot charges faster than expected, the vehicle is disconnected before completion, or if recurring charging slots are not used.

In one embodiment, the act of requesting a timeslot may comprise specifying a parking end-time.

Requesting a timeslot may involve defining an earliest or latest parking end-time, amount of hours to be parked, the urgency of charging the car.

A further objective of the invention is achieved by a method of prioritizing the sequence of charging vehicles registered in a system according to the invention.

The method comprises acts of the charging slot prioritizing module:
- determining the registered electric vehicle with the closest parking end-time and allocating it the next time slot; and
- establishing the sequence of connecting and disconnecting electric connection between the charging unit and each satellite charger based on information of the requested timeslots.

The registered and connected electric vehicle with the closest parking end-time may be prioritized. The charging slot prioritizing module may create the optimal charging sequence to ensure an optimal utilization of the charging capability of the sequential charging system.

In one embodiment, the method of prioritizing may comprise handling a request for a timeslot.

The charging slot prioritizing module may determine the availability of timeslots within the requested timeslot and accept or deny the request based on the determined availability.

The charging slot prioritizing module may notify the user or the vehicle that requested the timeslot whether or not the timeslot request was accepted or denied.

In an aspect, the charging slot prioritizing module gives the user a real time feedback on availability.

In one embodiment, the method of prioritizing may further comprise an act of the charging slot prioritizing module of reprioritizing the sequence of charging the vehicles registered in the system.

The determined sequence may need to be reprioritized if a prioritized vehicle needs urgent charging, if a registered vehicle has a closer parking end-time, if one of the vehicles with an allocated timeslot charges faster or slower than expected, if a vehicle is cancelled or disconnected before completion, or if recurring charging slots are not used.

In one embodiment of the method of prioritizing, a vehicle connected to the charging station may be charged non-stop.

In one embodiment of the method of prioritizing, the vehicles may be charged in multiple smaller slots depending on the prioritized sequence.

When vehicles are parked long-term, such as in airports, an electric vehicle may be charged in small slots when no other vehicle needs to be prioritized. The long-term parked vehicle may be temporarily disconnected from the power supply if a vehicle needs to be charged fast because of a close approaching parking end-time.

A further objective of the invention is achieved by a method of refitting an existing charging solution to a sequential charging system according to the invention.

The method of refitting comprises an act of providing and connecting the existing charging solution to the following:
- a plurality of satellite chargers each configured for engaging vehicle charging means;
- one or more switches configured for connecting and disconnecting an electrical connection between the existing charging solution and each of the satellite chargers;
- a charging slot prioritizing module; and
- a sequence controller configured for controlling the switches and being in communication with the charging slot prioritizing module.

The switches may e.g. be relays and/or connectors.

The system is simple to install and has low costs for establishment and operation which also makes it easy to scale and expand in line with increased demand for charging. The system can be easily implemented in existing parallel charging stations and thereby expand the number of vehicles in a public or semi-public location that have access to a charging station.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

An embodiment of the invention is described in the following with reference to the figures, where:
Figure 1 illustrates the sequential charging system according to the invention;
Figure 2 illustrates an embodiment of the invention comprising relay units;
Figure 3 illustrates a charging unit;
Figure 4 illustrates a number of vehicles assigned to a charging slot;
Figure 5 illustrates methods of charging a vehicle and prioritizing a charging sequence.

| | |
|---|---|
| System | 1 |
| electric vehicle | 10 |
| vehicle charging means | 11 |
| vehicle information input | 12 |
| charging unit | 20 |
| power supply | 21 |
| box | 22 |
| satellite chargers | 30 |
| switches | 40 |
| connected | 40a |
| disconnected | 40b |
| relay unit | 41 |
| relay | 42 |
| contactor | 43 |
| charging slot prioritizing module | 50 |
| charging slot | 51 |
| time slot | 52 |
| parking end-time | 53 |
| sequence controller | 60 |
| system back-end | 70 |
| user interface | 80 |
| method for charging | 100 |
| creating | 200 |
| requesting | 300 |
| receiving | 400 |
| connecting | 500 |
| method of reprioritizing | 600 |
| determining | 700 |
| establishing | 800 |
| reprioritizing | 900 |

### Detailed Description of the Invention

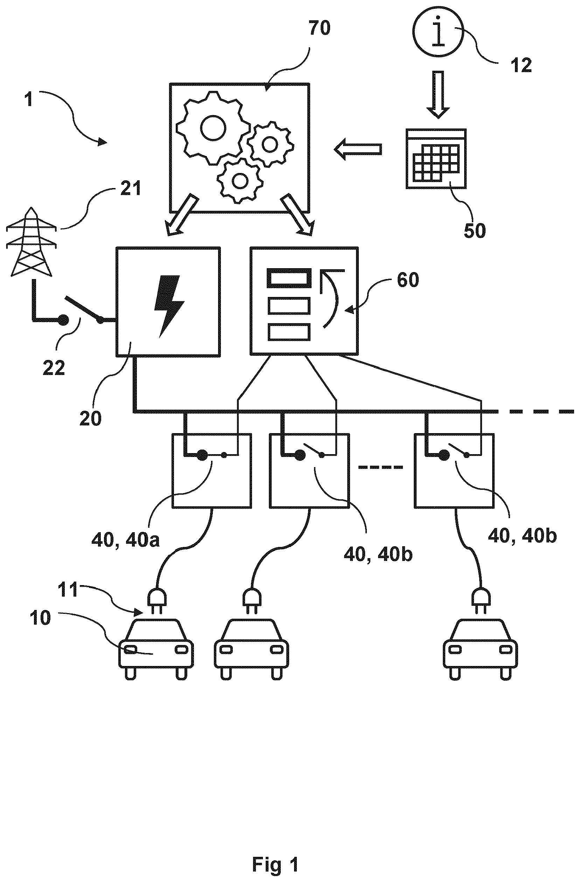

Figure 1 show an embodiment of a system 1 for sequential charging electric vehicles 10.

The system comprises a charging unit 20 connected to a power supply 21 wherein a switch connector 22 is configured for connecting and disconnecting the electrical connection between the power supply 21 and the charging unit 20.

The system comprises a plurality of satellite chargers 30 each electrically connected to the charging unit 20. Each satellite charger 30 is configured for engaging vehicle charging means 11.

The satellite charger 30 further comprises a power cable with a power plug arranged for engaging the vehicle charging means 11. In another embodiment (not shown) the vehicle charging means 11 comprise inductive charging configured for charging a parked electric vehicle 10.

The system comprises a one or more switches 40 connecting 40a and disconnecting 40b the electrical connection between the charging unit 20 and each of the satellite chargers 30.

The system comprises a charging slot prioritizing module 50 configured for controlling the power supply switch 22.

The system comprises a sequence controller 60 in communication with the charging slot prioritizing module 50. The sequence controller 60 is configured for controlling the switches 40.

The charging slot prioritizing module 50 is configured for receiving vehicle information input 12 regarding an electric vehicle 10, and 50 allocating a charging slot based on charging slot availability.

The vehicle information input comprises of one or more of the following:
- time of engagement of vehicle charging means 10;
- earliest parking end-time;
- latest parking end-time;
- battery status;
- vehicle charging capability;
- urgency;
- request to charge as soon as possible.

The charging slot prioritizing module 50 further takes vehicle information input 12 from one or more further engaged electric vehicles 10, the availability of satellite chargers 30, and info from a prioritized user into consideration.

The charging slot prioritizing module 50 is arranged to communicate with a system back end 70 and with one or more of the following:
- user interface on charger unit 20 and/or satellite charger 30;
- cloud-based user platform such as an app on a mobile device;
- admin user device for overall status such as overview of allocated slots, need for maintenance, utilization %.

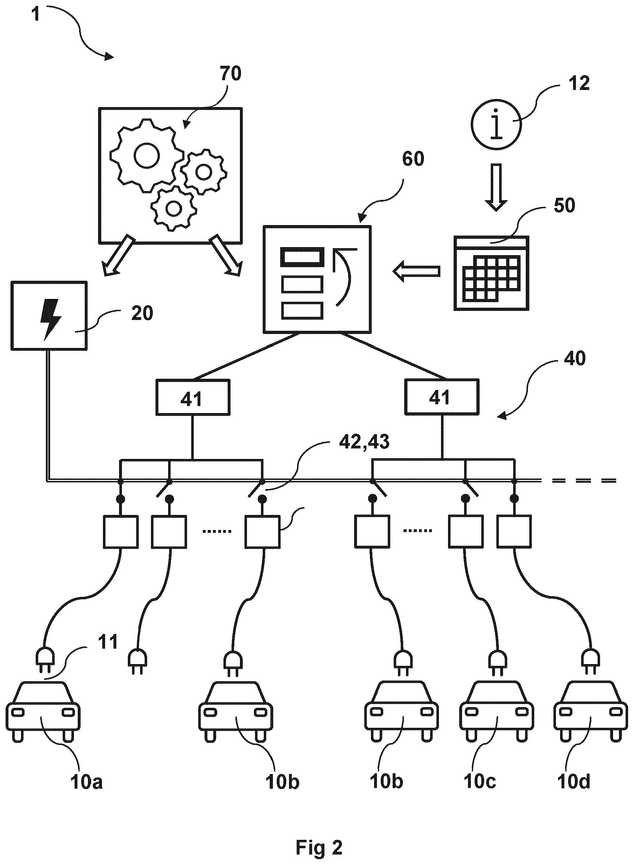

Figure 2 illustrates an embodiment where the switches 40 are grouped in relay units 41, each comprising a plurality of relays 42. Each relay 42 is configured for controlling a contactor 43 connecting and disconnecting the electrical connection between the charging unit 20 and each of the satellite chargers 30.

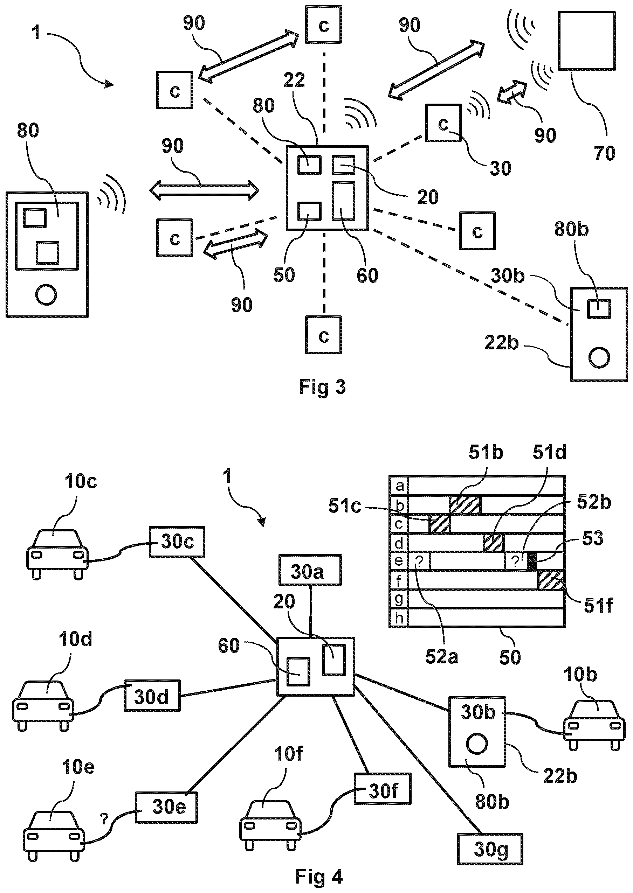

Fig. 3 illustrates a system 1 with a charging unit 20 arranged in a box 22 which may be arranged in an appropriate site. The box in this embodiment is arranged to hold the sequence controller, the charging slot prioritizing module 50 which may be arranged on data processing means alternatively or in combination the charging slot prioritizing module 50 is arranged in remote means such as a remote system back end 70. The box is further arranged with a user interface 80 which may allow the user to check availability status for current and upcoming charging slots, price, location of available satellite chargers 30 as well as enter vehicle information. The satellite chargers 30 may be arranged in the proximity of the box 22 and/or may be remote satellite charger 30b in which case a satellite charger box 22b may comprise a satellite user interface 80b. The user interface 80b may be provide the same display and interaction options as the user interface at the box i.e. may allow the user to check availability status for current and upcoming charging slots, price, location of available satellite chargers 30 as well as enter vehicle information.

A user interface 80 may also be arranged on e.g. a user mobile device where it for example may be an app on a tablet phone, watch etc.

The different components C of the system 1 such as the box 22, the charging unit 20, the satellite chargers 30, the charging slot prioritizing module 50, the mobile device, back end 70 etc may be arranged to communicate together as indicated by arrows 90. Each of the satellite chargers 30 are electrically connected with the charging unit 20 in order to provide charging power to a vehicle 10 when connected to said vehicle 10 and when the sequential controller 60 has opened a switch 40, such as a connector 43 in the satellite charger 30, based on signal from charging slot prioritization module 50 to start charging.

Fig 4 illustrates a system 1 where a number of vehicles 10b, 10c, 10d, 10f are connected and each assigned a charging slot 51a, 51b, 51c, 51f, but none are currently charging due to the assigned charging slots 51 which are based on vehicle information input 12. A requesting vehicle 10e is getting a charging slot allocated by the charging slot prioritization module 50. The user has indicated a parking end-time 53 and has the option of choosing time slot 52a or 52b which are available in the charging slot prioritization module 50 and are both before the user indicated latest parking end-time 53.

The power provided to each vehicle may be adjusted to depend on vehicle type and/or how fast the charging needs to be carried out.

In some embodiments, no or limited user input data are needed for example where all vehicles are owned by the same entity and all have the same parking end-time. For example, a company may have a number of company vehicles which all must be charged by 7.30 in the morning. In such cases, the system 1 may be arranged with reduced means for user input and may for example simply provide info on assigned charging slot 51 and/or level of charging.

Depending on various parameters, the system may comprise a number of satellite chargers 30 such as 4, 8, 12, 16, 20, 24, 28 or 32 satellites or more. The satellite chargers may be of the same type or different types e.g. with different options for user interaction or different options for displaying status information to the user as indicated for the remote satellite 30b in figures 3 and 4.

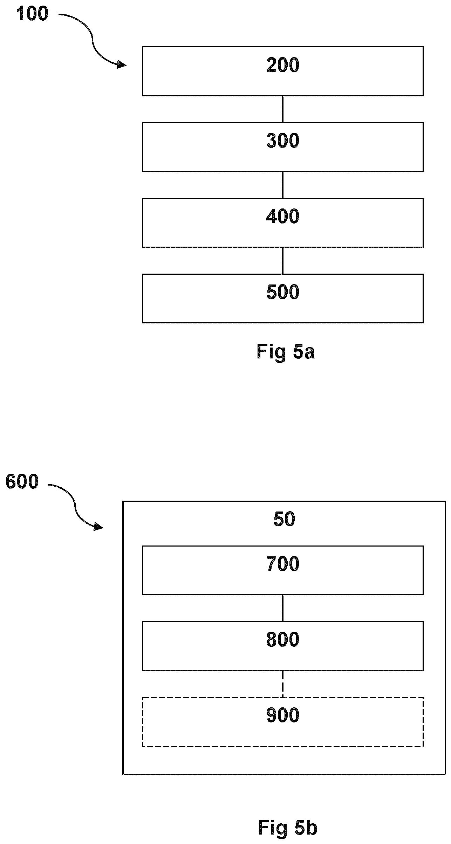

Figure 5a describes a method 100 of charging an electric vehicle 10 using the system 1. The method comprises an act of creating 200 a user account and registering one or more electric vehicles 10.

The method comprises an act of requesting 300 a timeslot for charging an electrical vehicle 10. The act of requesting a timeslot further comprise specifying a parking end-time.

The method comprises an act of receiving 400 information on the request being accepted or denied.

The method comprises an act of connecting 500 a satellite charger 30 to the vehicle charging means 20.

Figure 5b describes a method of prioritizing 600 the sequence of charging vehicles registered in a system 1. The method comprises an act of the charging slot prioritizing module 50 determining 700 the registered electric vehicle 10 with the closest parking end-time and allocating it the next time slot.

The method comprises an act of the charging slot prioritizing module 50 establishing 800 the sequence of connecting and disconnecting electric connection between the charging unit 20 and each satellite charger 30 based on information of the requested timeslots.

The method 600 further comprises receiving a request for a timeslot, wherein the charging slot prioritizing module 50 determines the availability of timeslots within the requested timeslot and accepts or denies the request based on the determined availability.

The method 600 may further comprise an act of the charging slot prioritizing module 50 of reprioritizing 900 the sequence of charging the vehicles registered in the system 1.

## Claims

1. A system (1) for sequential charging electric vehicles (10), wherein the system comprises:
- a charging unit (20) connected to a power supply (21);
- a plurality of satellite chargers (30) each electrically connected to the charging unit (20), wherein each satellite charger (30) is configured for engaging vehicle charging means (11);
- one or more switches (40) connecting (40a) and disconnecting (40b) the electrical connection between the charging unit (20) and each of the satellite chargers (30), and optionally wherein the switches (40) are relays (42) and/or contactors (43);
- a charging slot prioritizing module (50); and
- a sequence controller (60) in communication with the charging slot prioritizing module (50), the sequence controller (60) is configured for controlling the switches (40).

2. The system (1) according to claim 1, wherein the charging slot prioritizing module (50) is configured for receiving vehicle information input (12), regarding an electric vehicle (10), comprising of one or more of the following:
- time of engagement of vehicle charging means (10);
- earliest parking end-time (53);
- latest parking end-time (53);
- battery status;
- vehicle charging capability;
- urgency;
- request to charge as soon as possible;
and wherein the charging slot prioritizing module (50) is arranged to allocate at least one charging slot for said electric vehicle (10) based on at least the vehicle information input (12).

3. The system (1) according to claim 2, wherein the charging slot prioritizing module (50) is arranged to allocate the at least one charging slot for an electric vehicle (10) based on further information about one or more of the following:
- vehicle information input (12) from one or more further engaged electric vehicles (10);
- availability of satellite chargers (30);
- info from a prioritized user.

4. The system (1) according to any of the preceding claims, wherein the switches (40) are grouped in one or more relay units (41) each comprising a plurality of relays (42), wherein each relay (42) is configured for controlling a contactor (43) connecting and disconnecting the electrical connection between the charging unit (20) and each of the satellite chargers (30).

5. The system (1) according to any of the preceding claims, wherein the charging slot prioritizing module (50) is arranged on data processing means in or near the sequence controller (60) or on remote data processing means and/or wherein the charging slot prioritizing module (50) allocates timeslots for charging an electric vehicle (10) based on charging patterns identified from previous use of a charging system (1).

6. The system according to any of the preceding claims wherein the charging slot prioritizing module (50) is arranged to communicate with a system back end (70) and with one or more of the following:
- user interface on charger unit (20) and/or satellite charger (30);
- cloud-based user platform such as an app on a mobile device;
- admin user device for overall status such as overview of allocated slots, need for maintenance, utilization %.

7. The system (1) according to any of the preceding claims, wherein the charging unit (20) supplies 11-600 kW, 11-47 kW, 20-47 kW, 47-180 kW, 80-350 kW, or 150-600 kW direct current to the vehicle charging means (11), but preferably 11-47 kW or 20-47 kW, or 3-50 kW, 3-8 kW, 7-22 kW, 15-30 kW or 20-50 kW alternating current to the vehicle charging means (11), but preferably 3-8 kW or 15-30 kW.

8. The system (1) according to any of the preceding claims, wherein the satellite charger (30) further comprises a power cable with a power plug arranged for engaging the vehicle charging means (11) and/or wherein the vehicle charging means (11) comprise inductive charging configured for charging a parked electric vehicle (10).

9. The system (1) according to any of the preceding claims, further comprises a power supply swich (22) configured for connecting and disconnecting the electrical connection between the power supply (21) and the charging unit (20), wherein the power supply switch (22) is controlled by the charging slot prioritizing module (50).

10. Method (100) of charging an electric vehicle (10) using the system (1) according to any of the preceding claims, wherein the method comprises one or more of the following acts:
- creating (200) a user account and registering one or more electric vehicles (10);
- requesting (300) a timeslot for charging an electrical vehicle (10);
- receiving (400) information on the request being accepted or denied; and if accepted
- connecting (500) a satellite charger (30) to the vehicle charging means (20), and optionally the act of requesting a timeslot comprises specifying a parking end-time.

11. Method of prioritizing (600) the sequence of charging vehicles registered in a system (1) according to any one or more of the preceding claims, wherein the method comprises acts of the charging slot prioritizing module (50):
- determining (700) the registered electric vehicle (10) with the closest parking end-time (53) and allocating it the next time slot; and
- establishing (800) the sequence of connecting and disconnecting electric connection between the charging unit (20) and each satellite charger (30) based on information of the requested timeslots.

12. The method (600) according to claim 11, further comprises handling a request for a timeslot, wherein the charging slot prioritizing module (50) determines the availability of timeslots within the requested timeslot and accepts or denies the request based on the determined availability.

13. The method (600) according to claim 11 or 12, further comprises an act of the charging slot prioritizing module (50) of reprioritizing (900) the sequence of charging the vehicles registered in the system (1).

14. The method according to any of claims 11-13 wherein a vehicle connected to the charging station is charged non-stop or wherein the vehicles are charged in smaller slots depending on the prioritized sequence, wherein a single vehicle (10) is charged in multiple smaller slots.

15. A method of refitting an existing charging solution to a sequential charging system (1) according to any of claims 1-9, wherein the method of comprises the act of providing and connecting the existing charging solution to the following:
- a plurality of satellite chargers (30) each configured for engaging vehicle charging means (11);
- one or more switches (40) configured for connecting and disconnecting an electrical connection between the existing charging solution and each of the satellite chargers (30);
- a charging slot prioritizing module (50); and
- a sequence controller (60) configured for controlling the switches (40) and being in communication with the charging slot prioritizing module (50).
